# EUROPEAN PATENT APPLICATION

(11) **EP 4 776 423 A1**
(43) Date of publication of application: **15.07.2026**
(21) Application number: 25864500.1
(22) Date of filing: 07.08.2025
(51) Int. Cl.: H01M 50/59, H01M 50/586, H01M 50/119, H01M 50/107, H01M 50/559

(54) **BATTERY CELL, AND BATTERY PACK AND VEHICLE INCLUDING SAME**

(30) Priority: 20.11.2024 KR 20240165816
(71) Applicant: LG ENERGY SOLUTION, LTD., Seoul 07335 (KR)
(72) Inventor: CHOI, Hyeonwoo, Daejeon 34122 (KR); KO, Kwanghun, Daejeon 34122 (KR); KIM, Geonguk, Daejeon 34122 (KR); HWANG, Dongsung, Daejeon 34122 (KR)
(74) Representative: Goddar, Heinz J.
(86) International application number: PCT/KR2025/011888
(87) International publication number: WO 2026/111100

(57) **Abstract**

A battery cell according to an aspect of the present disclosure includes a battery case, an electrode assembly accommodated in the battery case, and an insulator interposed between the electrode assembly and one bottom surface of the battery case, the insulator having a shape in which the area in contact with the electrode assembly and the bottom surface of the battery case is smaller than the area in contact with the electrode assembly.

## Description

### [TECHNICAL FIELD]

The present disclosure relates to battery cell and battery pack and vehicle including the same.

### [BACKGROUND]

Secondary batteries, unlike primary batteries which are non-rechargeable, are rechargeable batteries capable of charge and discharge cycles. They are widely utilized not only in portable electronic devices but also in electric vehicles (EVs) and hybrid electric vehicles (HEVs) driven by electric power sources.

These secondary batteries are attracting attention as a new energy source for promoting environmental friendliness and energy efficiency because they not only have the primary advantage of drastically reducing the use of fossil fuels, but also have the advantage of producing no byproducts from energy use.

Types of secondary batteries widely used today include lithium-ion batteries, lithium polymer batteries, nickel-cadmium batteries, nickel-hydrogen batteries, and nickel-zinc batteries. The operating voltage of a single secondary battery cell, i.e., a unit battery cell, is approximately 2.5 V to 4.5 V. Therefore, when a higher output voltage is required, the battery pack may be configured by electrically connecting a plurality of battery cells in series. In addition, a battery pack may be configured by connecting a plurality of battery cells in parallel depending on the charge/discharge capacity requirements. Accordingly, the number of battery cells included in the battery pack and the type of electrical connection thereof may be variously set depending on the required output voltage or the total charge/discharge capacity.

Meanwhile, as types of unit secondary battery cells, cylindrical, prismatic, and pouch-type battery cells are known. In the case of a cylindrical battery cell, an insulating separator is disposed between the positive and negative electrodes, and the electrodes and separator are wound to form a jelly-roll-type electrode assembly, which is then accommodated within a cylindrical battery case to constitute the battery cell. Furthermore, current collectors may be connected to the uncoated portions of the positive and negative electrodes, and the current collectors electrically connect the electrode assembly with electrode terminals exposed to the outside of the cell. Additionally, an electrolyte that enables the movement of lithium ions is injected into the inside of the battery case. Further, a battery cap is coupled to one side of the battery case to prevent leakage of the electrolyte and separation of the electrode assembly. In this case, a sealing gasket is interposed between the battery case and the battery cap to maintain electrical insulation therebetween, and to prevent not only leakage of the electrolyte but also ingress of moisture.

However, when the electrolyte remains accumulated on the inner bottom of the cylindrical battery case for an extended period, the electrolyte may corrode the battery case. When the battery case is corroded, nickel may be precipitated, thereby damaging the separator of the electrode assembly. If the separator is damaged, micro short-circuits may occur, resulting in a voltage drop of the battery cell.

### [SUMMARY]

### [TECHNICAL PROBLEM]

It is an object of the present disclosure to provide a battery cell capable of suppressing corrosion of a battery case by improving the fluidity of an electrolyte.

Furthermore, the present disclosure provides a battery pack and a vehicle including the above-described battery cell.

However, the technical problems to be solved by the present disclosure are not limited to those set forth above, and other objects not expressly mentioned will be clearly understood by those skilled in the art from the following description of the invention.

### [SOLUTION TO THE PROBLEM]

A battery cell according to an aspect of the present disclosure comprises: a battery case; an electrode assembly accommodated in the battery case; and an insulator interposed between the electrode assembly and an inner bottom surface of the battery case, the insulator being formed such that an area of contact with the inner bottom surface of the battery case is smaller than an area of contact with the electrode assembly.

The battery case may be made of a material containing nickel.

Furthermore, the insulator may include a flat portion in contact with the electrode assembly, and a protrusion extending from the flat portion toward the inner bottom surface of the battery case so as to contact the bottom surface of the case.

In addition, the battery case may have a hollow cylindrical shape, and the flat portion of the insulator may have a disc-shaped configuration.

Additionally, a through-hole may be formed at the center of the flat portion of the insulator.

Additionally, the battery cell may further include an electrode terminal provided on the inner bottom surface of the battery case and electrically connected to the electrode assembly.

Furthermore, the electrode terminal may be electrically connected to the electrode assembly by passing through the through-hole formed in the insulator.

The protrusion of the insulator may be formed in an annular shape.

The battery cell is further characterized in that the annular protrusion and the disc-shaped flat portion are formed concentrically.

Additionally, the insulator may include a first annular protrusion formed along an outer edge of the flat portion, and a second annular protrusion formed along an edge of a through-hole provided at the center of the flat portion.

Furthermore, at least one of the first annular protrusion and the second annular protrusion may be formed in a discontinuous manner with at least one cut-out region.

Additionally, the protrusion of the insulator may include a plurality of pillars.

Meanwhile, the present disclosure provides a battery pack comprising at least one battery cell according to the aforementioned aspect.

In addition, the present disclosure provides a vehicle comprising at least one battery pack according to the aforementioned aspect.

### [ADVANTAGEOUS EFFECTS OF THE INVENTION]

According to the present disclosure, the fluidity of the electrolyte can be improved to suppress corrosion of the battery case.

However, the advantageous effects of the present disclosure are not limited to those described above, and other technical effects not explicitly mentioned will be clearly understood by those of ordinary skill in the art from the following description.

### [BRIEF DESCRIPTION OF DRAWINGS]

FIG. 1 is a perspective view illustrating a battery cell according to one aspect of the present disclosure.
FIG. 2 is a longitudinal cross-sectional perspective view of the battery cell of FIG. 1.
FIG. 3 is a longitudinal cross-sectional view of the battery cell of FIG. 1.
FIG. 4 is an enlarged rear perspective view of the insulator used in the battery cell of FIG. 1.
FIG. 5 is an enlarged rear perspective view of an insulator used in a battery cell according to another aspect of the present disclosure.
FIG. 6 is an enlarged rear perspective view of an insulator used in a battery cell according to another aspect of the present disclosure.
FIG. 7 is a drawing illustrating a battery pack including the battery cell of FIG. 1.
FIG. 8 is a drawing illustrating a vehicle including the battery pack of FIG. 6.

### [MODES FOR CARRYING OUT THE INVENTION]

The advantages and features of the present disclosure, and the methods of achieving them, will become apparent with reference to the aspects described in detail below in conjunction with the accompanying drawings. However, the present disclosure is not limited to the aspects disclosed herein but may be implemented in various forms. These aspects are provided only to ensure that the disclosure of the present disclosure is complete and to fully inform a person of ordinary skill in the art of the scope of the invention. The present disclosure is defined only by the scope of the claims. Accordingly, in some aspects, well-known process steps, device structures, and technologies may not be described in detail to avoid obscuring the present disclosure. Throughout the specification, like reference numerals refer to like elements.

In the drawings, the thicknesses of layers and regions are exaggerated to clearly show multiple layers and regions. Throughout the specification, similar parts are designated by the same reference numerals. When an element such as a layer, film, region, or plate is referred to as being "on" another element, it can be directly on the other element or intervening elements may be present. Conversely, when a part is referred to as being "directly on" another part, it is to be understood that there is no other part in between. Similarly, when an element is referred to as being "under" another element, it can be directly under the other element or intervening elements may be present. Conversely, when a part is referred to as being "directly under" another part, it is to be understood that there is no other part in between.

Throughout this specification, unless the context dictates otherwise, each component may be singular or plural.

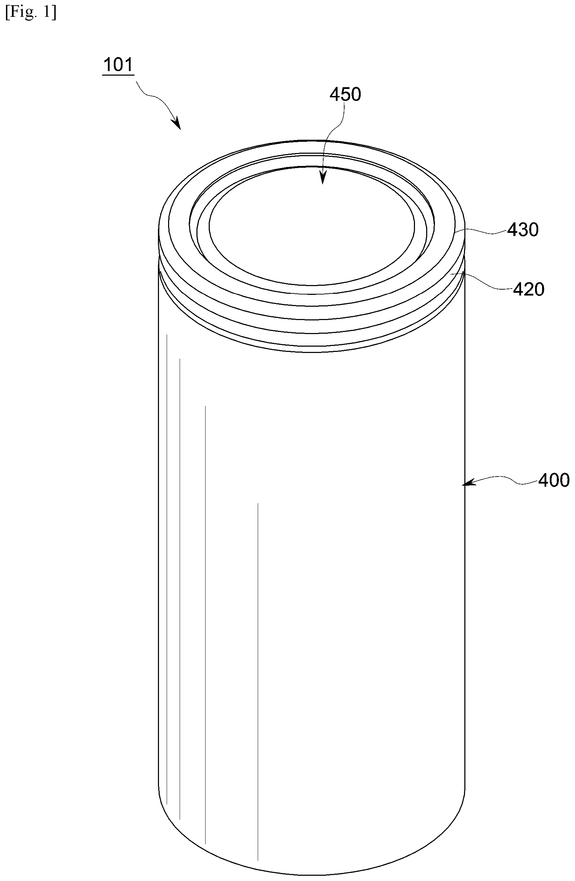

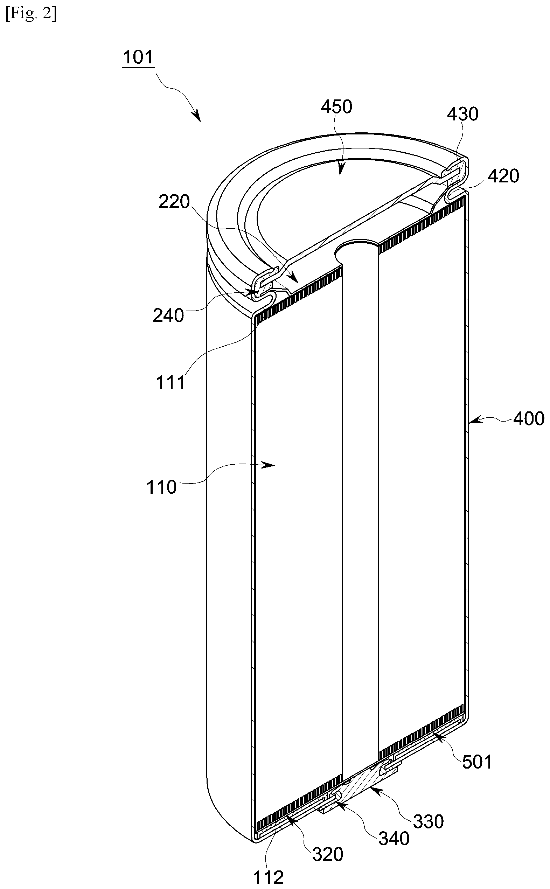

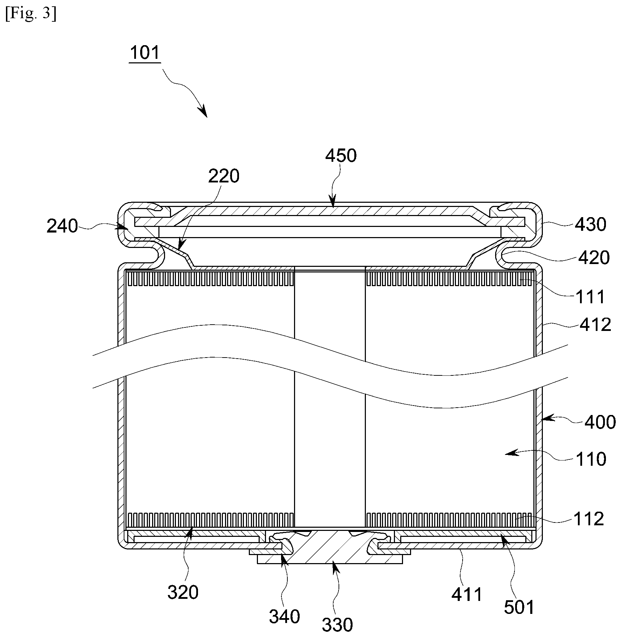

FIGS. 1 to 3 are drawings illustrating a battery cell (101) according to one embodiment of the present disclosure. FIG. 1 is a perspective view of the battery cell (101), FIG. 2 is a longitudinal cross-sectional perspective view of the battery cell (101), and FIG. 3 is a longitudinal cross-sectional view of the battery cell (101).

Referring to FIGS. 1 to 3, a battery cell (101) according to one aspect of the present disclosure includes a battery case (400), an electrode assembly (110), and an insulator (501).

Additionally, the battery cell (101) may further comprise at least one of a cap plate (450), a sealing gasket (240), current collector plates (220, 320), an electrode terminal (330), and a terminal gasket (340).

The electrode assembly (110) comprises a first electrode having a first polarity, a second electrode having an opposite polarity, and a separator disposed between the first electrode and the second electrode. For example, the first electrode may be either an anode or a cathode, and the second electrode may correspond to an electrode having a polarity opposite to that of the first electrode.

The electrode assembly (110) may have a structure in which the first electrode, the second electrode, and the separator interposed therebetween are wound in a single direction. The electrode assembly (110) may have, for example, a jelly roll structure. That is, the electrode assembly (110) may be manufactured by winding a laminate formed by stacking a sheet-type first electrode current collector and a sheet-type second electrode current collector with a separator interposed therebetween, at least once, in one direction about a winding center. However, the aspect of the present disclosure is not limited to the foregoing description, and any jelly-roll structure known to those skilled in the art may be applied without limitation.

The first electrode comprises a first electrode current collector and a first electrode active material coated on one or both surfaces of the first electrode current collector. At one end in the width direction of the first electrode current collector, a first uncoated portion (111) is provided where the first electrode active material is not coated. The first uncoated portion (111) can function as a first electrode tab. The first uncoated portion (111) is disposed at an upper part, in the height direction, of the electrode assembly (110) accommodated in the battery case (400). That is, the first electrode current collector includes a first uncoated portion (111) that is not coated with an active material layer on its long-side end and is exposed outside the separator, and a portion of the first uncoated portion (111) itself functions as an electrode tab. For example, in this specification, the first electrode may be a negative electrode, and the first uncoated portion (111) may serve as a negative electrode tab.

The second electrode comprises a second electrode current collector and a second electrode active material coated on one or both surfaces of the second electrode current collector. At the opposite end of the second electrode current collector in the width direction, a second uncoated portion (112) is provided where the second electrode active material is not coated. The second uncoated portion (112) can function as a second electrode tab. The second uncoated portion (112) is disposed at a lower part, in the height direction, of the electrode assembly (110) accommodated in the battery case (400). That is, the second electrode current collector includes a second uncoated portion (112) that is not coated with an active material layer on its long-side end and is exposed outside the separator, and at least a portion of the second uncoated portion (112) itself serves as an electrode tab. For example, in this specification, the second electrode may be a positive electrode, and the second uncoated portion (112) may serve as a positive electrode tab.

Meanwhile, as an exemplary form, the first uncoated portion (111) may be provided at an upper portion in the height direction of the electrode assembly (110) accommodated in the battery case (400), and the second uncoated portion (112) may be provided at a lower portion thereof. Accordingly, the first uncoated portion (111) may alternatively be provided at a lower portion in the height direction of the electrode assembly (110), and the second uncoated portion (112) may be provided at an upper portion of the electrode assembly (110) accommodated in the battery case (400).

In this manner, the first uncoated portion (111) and the second uncoated portion (112) may extend in mutually opposite directions along the height direction of the cylindrical battery cell (101). In the present disclosure, the positive electrode active material coated on the positive electrode plate and the negative electrode active material coated on the negative electrode plate may be employed without limitation, provided that they are active materials known to those skilled in the art.

An opening may be formed at the top of the battery case (400). That is, the opening may be provided at the top of the battery cell (101). The battery case (400) accommodates the electrode assembly (110) through an opening formed at an upper portion, and further accommodates an electrolyte.

Meanwhile, an electrode terminal (330), which will be described later, may be disposed on a lower surface opposite to the opening of the battery case (400). For example, in this specification, the electrode terminal (330) may be electrically connected to the second uncoated portion (112) of the second electrode, which may serve as the anode. That is, the electrode terminal (330) may be a positive electrode terminal.

Specifically, the battery case (400) includes a circular bottom portion (411), a side portion (412) extending from the bottom portion (411), and a crimping portion (430) formed by bending an end of the side portion (412) inward. That is, the battery case (400) may include a hollow cylindrical shape.

Additionally, the battery case (400) may further comprise a beading portion (420) formed by inwardly pressing the side portion (412) adjacent to the crimping portion (430).

The crimping portion (430) may be bent and extended inward of the battery case (400) so as to wrap around and secure an edge of the cap plate (450) together with the sealing gasket (240) described later.

Specifically, the crimping portion (430) can be formed in the upper area of the battery case (400). The crimping portion (430) may be bent and extended inward from an upper periphery of the battery case (400) along a radial direction of the cylindrical battery cell (101). The crimping portion (430) is disposed in an area corresponding to an edge circumference of the cap plate (450) to be described later, and secures the cap plate (450), thereby preventing the cap plate (450) from being detached upward.

Additionally, when the battery case (400) is provided with a beading portion (420), the crimping portion (430) may be formed above the beading portion (420). The crimping portion (430) extends from the beading portion (420) and is bent and extended so as to surround an outer surface of the cap plate (450) placed on the beading portion (420), as well as a portion of an upper surface of the cap plate (450). An upper end of the crimping portion (430) may extend inward by a predetermined distance along a radial direction of the cylindrical battery cell (101) and wrap around a portion of an upper surface of the cap plate (450). In this way, the crimping portion (430) secures the periphery of the edge of the upper surface of the cap plate (450). That is, an area around an edge of the cap plate (450) is interposed between an upper end of the crimping portion (430) and the beading portion (420), and is fixed to the battery case (400) so as to cover an opening of the battery case (400).

Additionally, the crimping portion (430) may be formed so as to wrap a portion of the first current collector plate (220), to be described later, together with an edge of the cap plate (450). In this case, an end of the crimping portion (430) of the battery case (400) may be bent so as to press into the sealing gasket (240) surrounding an edge of the cap plate (450).

The beading portion (420) can be formed by pressing the outer circumference of the battery case (400) inward. That is, the beading portion (420) has a recessed shape to a predetermined depth along a radial direction from an outer surface of the battery case (400), and extends in a circumferential direction of the battery case (400). The beading portion (420) prevents the electrode assembly (110), having a size corresponding to a width of the battery case (400), from being released through an upper opening of the battery case (400), and may serve as a support portion on which the cap plate (450) is mounted.

Additionally, the battery case (400) may be made of a material containing nickel. For example, the battery case (400) can be made of nickel-plated steel plate.

The cap plate (450) has an edge crimped by the crimping portion (430) of the battery case (400) so as to cover an open end of the battery case (400).

In other words, the cap plate (450) constitutes one side of the battery cell (101), namely a side opposite to the bottom portion (411) of the battery case (400). Accordingly, one bottom surface of the battery case (400) becomes the bottom portion (411), and the other bottom surface of the battery case (400) is covered by the cap plate (450).

For example, the cap plate (450) is non-polar and may be made of a metal material to ensure rigidity. That is, even if the cap plate (450) is made of a conductive metal material, it may not have polarity. In other words, the cap plate (450) may be electrically insulated from the battery case (400), which functions as a negative terminal, and from the electrode terminal (330), which functions as a positive terminal. Accordingly, the cap plate (450) need not be electrically connected to the electrode assembly (110) or the battery case (400), and its material is not necessarily required to be a conductive metal.

Meanwhile, in one aspect of the present disclosure, the vertical orientation of the battery cell (101) may be varied as desired depending on the form in which the battery cell (101) is accommodated in the battery pack (10) to be described later. That is, as shown in FIGS. 1 to 3, the electrode terminal (330) is arranged to face downward and the cap plate (450) to face upward; however, the arrangement of the battery cell (101) is not limited thereto, and the electrode terminal (330) may alternatively face upward with the cap plate (450) facing downward. Accordingly, the first uncoated portion (111) described above may be positioned at a lower portion in a height direction of the electrode assembly (110) accommodated in the battery case (400), or alternatively, the second uncoated portion (112) may be positioned at the lower portion in the height direction of the electrode assembly (110) accommodated in the battery case (400).

The sealing gasket (240) is crimped together with an edge of the cap plate (450) by the crimping portion (430) of the battery case (400), thereby sealing the battery case (400). In this case, the sealing gasket (240) may be bent together with the bent shape of the crimping portion (430) of the battery case (400). When the battery case (400) includes a beading portion (420), a sealing gasket (240) may be disposed between an upper surface of the beading portion (420) and an upper end of the crimping portion (430).

Accordingly, the sealing gasket (240) is interposed between the cap plate (450) and the crimping portion (430) of the battery case (400) to seal an open top of the battery case (400) and to electrically insulate the battery case (400) from the cap plate (450). Accordingly, the sealing gasket (240) may be formed of a material having insulating and elastic properties, and may comprise a polymer resin.

For example, the sealing gasket (240) may comprise one or more heat-resistant resins selected from the group consisting of polypropylene (PP), polyethylene (PE), polyimide (PI), polycarbonate (PC), polybutylene terephthalate (PBT), and polystyrene (PS).

Additionally, the battery case (400) may be electrically connected to the first uncoated portion (111) of the electrode assembly (110). In this case, the battery case (400) may have the same polarity as the first uncoated portion (111). For example, the battery case (400) can function as a negative terminal. On the other hand, the battery case (400) must be insulated from the second uncoated portion (112) of the electrode assembly (200).

The electrode terminal (330) may have a riveting structure. Specifically, the electrode terminal (330) can be riveted through a through hole formed in the bottom portion (411) of the battery case (400). Furthermore, a terminal gasket (340) can be provided between the electrode terminal (330) and the outer diameter of the through-hole.

The electrode terminal (330) can be electrically connected to the second uncoated portion (112) of the electrode assembly (110). In this case, the electrode terminal (330) may have the same polarity as the second uncoated portion (112). For example, the electrode terminal (330) can function as a positive electrode terminal.

The current collector plates (220, 320) may comprise a first current collector plate (220) that electrically connects the first uncoated portion (111) of the electrode assembly (110) to the battery case (400), and a second current collector plate (320) that electrically connects the second uncoated portion (112) of the electrode assembly (110) to the electrode terminal (330).

Specifically, one end of the first current collector plate (220) may be interposed between the sealing gasket (240) and the beading portion (420) to contact the beading portion (420), while the other end may contact the first uncoated portion (111) of the electrode assembly (110). In this case, one end of the first current collector plate (220) may be pressed and fixed together with an edge of the cap plate (450) when an end of the crimping portion (430) of the battery case (400) is bent so as to press into the sealing gasket (240).

An insulator (501) is interposed between the electrode assembly (110) and one bottom surface of the battery case (400). For example, one side of the bottom of the battery case (400) may be a bottom portion (411). Furthermore, the insulator (501) may be formed such that an area in contact with the inner bottom surface of the battery case (400) is smaller than an area in contact with the electrode assembly (110).

Specifically, the insulator (501) electrically insulates the second electrode of the electrode assembly (110) from the battery case (400). More specifically, the insulator (501) may be interposed between the second collector plate (320), which is connected to the second electrode of the electrode assembly (110), and a bottom portion (411) of the battery case (400), so as to prevent the second collector plate (320) from being electrically connected to the bottom portion (411) of the battery case (400).

The insulator (501) may be formed of various materials known to those skilled in the art to which the present disclosure pertains. For example, the insulator (501) may include silicon.

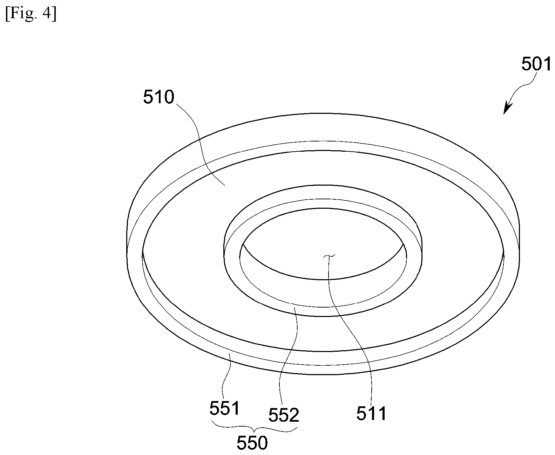

FIG. 4 is an enlarged rear perspective view illustrating the insulator (501) employed in a battery cell (101) according to one aspect of the present disclosure.

Referring to FIG. 4, the insulator (501) may include a flat portion (510) that contacts the electrode assembly (110), and a protrusion (550) that extends from the flat portion (510) toward the bottom surface of one side of the battery case (400) and contacts the bottom surface of one side of the battery case (400).

Additionally, as described above, the battery case (400) may include a hollow cylindrical shape. The flat portion (510) of the insulator (501) may include a circular shape corresponding to the bottom portion (411) of the battery case (400). And the flat portion (510) of the insulator (501) may have a through hole (511) formed in the center. As described above, the electrode terminal (330) may be installed on one side of the bottom surface of the battery case (400) and electrically connected to the electrode assembly (110). At this time, the electrode terminal (330) may be electrically connected to the electrode assembly (110) by passing through a through-hole (511) formed in the insulator (501).

Additionally, the protrusion (550) of the insulator (501) may be formed in an annular shape. For example, the protrusion (550) of the insulator (501) may comprise a first annular protrusion (551) formed along an edge of the flat portion (510) and a second annular protrusion (552) formed along an edge of the through-hole (511) formed at the center of the flat portion (510).

Additionally, the annular shape of the protrusion (550) and the circular-plate shape of the flat portion (510) may be concentric.

By this structure, the insulator (501) may secure structural rigidity while minimizing a contact area with the bottom surface of one side of the battery case (400).

Even if the vertical orientation of the battery cell (101) is changed, the electrolyte tends to accumulate at the contact surface between the insulator (501) and the battery case (400). If the electrolyte remains accumulated at the contact surface for a long period of time, it may corrode the battery case (400). When the battery case (400) corrodes, nickel may be precipitated from the battery case (400), thereby damaging the separator of the electrode assembly (110). If the separator is damaged, a micro-short may occur, leading to a voltage drop in the battery cell (101).

However, according to one aspect of the present disclosure, since the contact area between the insulator (501) and the bottom surface of one side of the battery case (400) is minimized, accumulation of electrolyte at the contact surface between the insulator (501) and the battery case (400) can be reduced, thereby suppressing corrosion of the battery case (400).

Meanwhile, the present disclosure is not limited to the structure of the battery cell (101) described above. If the insulator (501), which insulates either the positive or negative electrode of the electrode assembly (110) and the current collector plate (220, 320) connected thereto from the battery case (400), has a structure interposed between the electrode assembly (110) or the current collector plate (220, 320) and a bottom surface of the battery case (400), it may also be applied to a battery cell (101) having a structure different from that described above.

By this configuration, according to one aspect of the present disclosure, the fluidity of the electrolyte can be improved, thereby suppressing corrosion of the battery case (400).

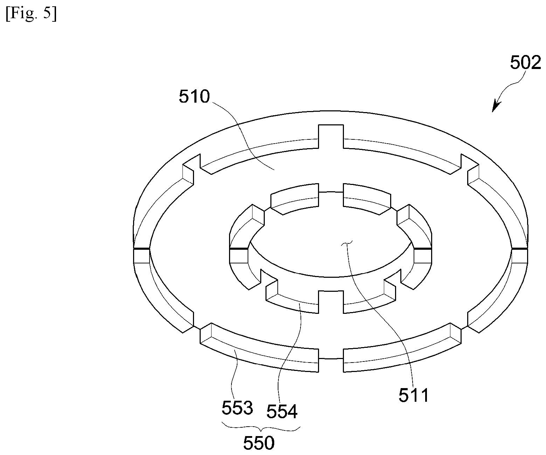

Hereinafter, with reference to FIG. 5, an insulator (502) used in another aspect of the present disclosure will be described.

In another aspect of the present disclosure, at least one of the first annular protrusion (553) and the second annular protrusion (554) of the insulator (502) may be formed in a discontinuous shape in which at least one area is cut off.

Accordingly, the contact area between the protrusion (550) and the bottom surface of one side of the battery case (400) can be further reduced, and the fluidity of the electrolyte can be further improved, since the electrolyte may move through the discontinuous space of one or more of the first annular protrusion (553) and the second annular protrusion (554).

By this configuration, according to another aspect of the present disclosure, the fluidity of the electrolyte can be further improved, thereby suppressing corrosion of the battery case (400). In this way, as the fluidity of the electrolyte inside the battery cell increases, the overall resistance can be reduced.

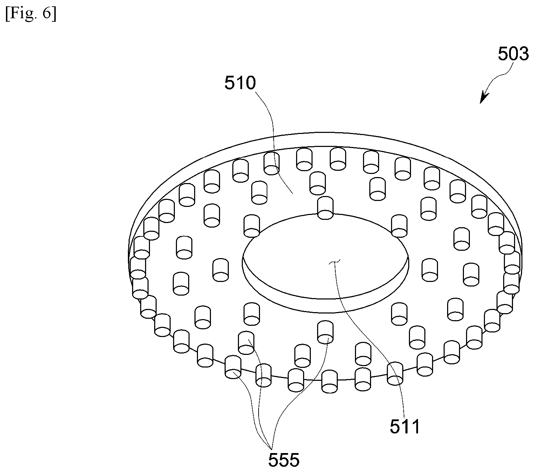

Hereinafter, with reference to FIG. 6, an insulator (503) used in another aspect of the present disclosure will be described.

In another aspect of the present disclosure, the insulator (503) may have a protrusion (555) that includes a plurality of pillars.

Accordingly, the area where the protrusion (550) comes into contact with the bottom surface of one side of the battery case can be reduced, and the strength of the insulator can be secured while improving the fluidity of the electrolyte.

By this configuration, according to another aspect of the present disclosure, the fluidity of the electrolyte can be further improved, thereby suppressing corrosion of the battery case (400). In this way, as the fluidity of the electrolyte inside the battery cell increases, the overall resistance can be reduced.

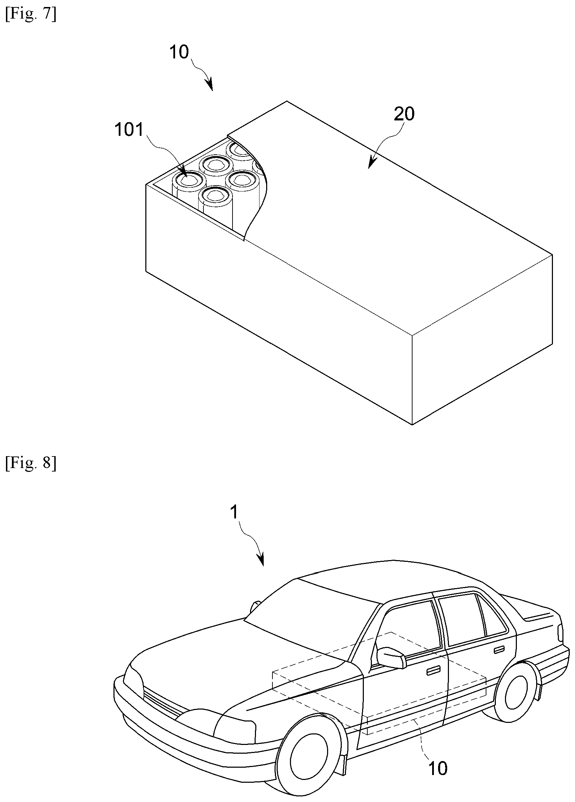

FIG. 7 is a drawing illustrating a battery pack (10) including the battery cell (101) of FIG. 1.

Referring to FIG. 7, a battery pack (10) according to the present disclosure may include at least one battery cell (101) according to the present disclosure described above. In addition, the battery pack (10) according to the present disclosure may comprise a pack case (20) configured to accommodate at least one battery cell (101). Furthermore, in addition to the battery cell (101), the battery pack (10) may further include various other components known at the time of filing of the present disclosure, such as a battery management system (BMS), a battery disconnect unit (BDU), a relay, and a current sensor.

FIG. 8 is a drawing illustrating a vehicle (1) including the battery pack (10) of FIG. 7.

Referring to FIG. 8, a vehicle (1) according to the present disclosure may include at least one battery pack (10) according to the present disclosure.

The battery pack (10) according to the present disclosure can be applied to a vehicle (1) such as an electric vehicle or a hybrid vehicle. That is, a vehicle (1) according to the present disclosure may include a battery pack (10) according to the present disclosure. For example, a vehicle (1) according to the present disclosure may further include, in addition to a battery pack (10) according to the present disclosure, a vehicle body, a motor, and a control device such as an electronic control unit (ECU). For example, the vehicle (1) according to the present disclosure may further include, in addition to the battery pack (10), a vehicle body, a motor, and a control device such as an electronic control unit (ECU).

Although operations are illustrated in the drawings in a particular order, it should not be construed that the operations must be performed in the depicted order or in any sequential order, nor that all of the depicted operations must necessarily be performed to achieve the desired result. In certain situations, multitasking and parallel processing may be advantageous. Moreover, the separation of the various components in the foregoing aspects should not be construed as necessarily requiring such separation, and it should be understood that the described program components and systems may alternatively be integrated into a single software product or packaged into multiple software products.

The foregoing description is merely illustrative of the technical idea of the present aspect, and those skilled in the art to which the present aspect pertains will be able to make various modifications and alterations without departing from the essential characteristics of the present aspect. Accordingly, these aspects are not intended to limit the technical idea of the present disclosure but rather to illustrate it, and the scope of the technical idea of the present disclosure is not restricted to these aspects. The scope of protection of the present aspect shall be interpreted on the basis of the claims below, and all technical ideas falling within an equivalent scope shall be construed as being included within the scope of rights of the present aspect.

### [REFERENCE NUMERALS]

1: Vehicle
10: Battery Pack
20: Pack Case
101: Battery Cell
110: Electrode Assembly
111: First Uncoated Portion
112: Second Uncoated Portion
220: First Current Collector Plate
240: Sealing Gasket
320: Second Current Collector Plate
330: Electrode Terminal
340: Terminal Gasket
400: Battery Case
411: Bottom Portion
412: Side Portion
420: Beading Portion
430: Crimping Portion
450: Cap Plate
501, 502, 503: Insulators
510: Flat Portion
511: Through-hole
550, 555: Protrusions
551, 553: First Annular Protrusions
552, 554: Second Annular Protrusions

### [INDUSTRIAL APPLICABILITY]

The present disclosure can be used to provide a battery cell in which corrosion of the battery case is suppressed by improving the fluidity of the electrolyte.

## Claims

1. A battery cell, comprising:
a battery case; an electrode assembly accommodated in the battery case; and an insulator interposed between the electrode assembly and a bottom surface of the battery case, wherein the insulator is formed in a shape such that an area of contact with the bottom surface of the battery case is smaller than an area of contact with the electrode assembly.

2. The battery cell of claim 1, wherein
the battery case is made of a material including nickel.

3. The battery cell of claim 1, wherein
the insulator comprises:
a flat portion in contact with the electrode assembly; and
a protrusion extending from the flat portion toward a bottom surface of the battery case, and
wherein the protrusion is in contact with the bottom surface of the case.

4. The battery cell of claim 3, wherein
the battery case includes a hollow cylindrical shape, and
wherein the flat portion of the insulator includes a circular-plate shape.

5. The battery cell of claim 4, wherein
the flat portion of the insulator has a through-hole formed in a center thereof.

6. The battery cell of claim 5,
further comprising an electrode terminal installed on a bottom surface of the battery case and electrically connected to the electrode assembly.

7. The battery cell of claim 6, wherein
the electrode terminal passes through the through-hole formed in the insulator and is electrically connected to the electrode assembly.

8. The battery cell of claim 4, wherein
the protrusion of the insulator is formed in an annular shape.

9. The battery cell of claim 8, wherein
the annular shape of the protrusion and the circular-plate shape of the flat portion are concentric.

10. The battery cell of claim 5, wherein
the protrusion of the insulator comprises:
a first annular protrusion formed along an edge of the flat portion; and
a second annular protrusion formed along an edge of the through-hole formed in the center of the flat portion.

11. The battery cell of claim 10, wherein
at least one of the first annular protrusion and the second annular protrusion has a discontinuous form with at least one severed area.

12. The battery cell of claim 3, wherein
the protrusion of the insulator comprises a plurality of pillars.

13. A battery pack, comprising at least one battery cell as recited in any one of claims 1 to 12.

14. A vehicle, comprising at least one battery pack as recited in claim 13.
